# EUROPEAN PATENT APPLICATION

(11) **EP 3 760 457 A1**
(43) Date of publication of application: **06.01.2021**
(21) Application number: 20183103.9
(22) Date of filing: 30.06.2020
(51) Int. Cl.: B60C 25/13, B60C 25/138

(54) **BEAD BREAKING UNIT FOR TYRE CHANGING MACHINES**

(30) Priority: 01.07.2019 IT 201900010590
(71) Applicant: Beissbarth GmbH, 80993 München (DE)
(72) Inventor: BARTOLI, Pietro, 80993 Munich (DE)
(74) Representative: Schmitt-Nilson Schraud Waibel Wohlfrom Patentanwälte Partnerschaft mbB

(57) **Abstract**

The bead breaking unit (6) for tyre changing machines (1), comprises a bead breaking arm (61), a bead breaking tool (62) for the bead breaking of a tyre (P) of a wheel (R) and actuation means (63) fixed to the bead breaking arm (62) and to the bead breaking tool (62) and intended to make the bead breaking tool (62) vibrate during the bead breaking of the tyre (P).

## Description

The present invention relates to a bead breaking unit for tyre changing machines. The tyre changing machines are commonly used for the fitting/removal of wheel tyres for vehicles onto/from the respective rims.

As is known, before removing a tyre completely, the beads thereof have to be detached from the rim seat. To do this, a bead breaking arm mounted on the tyre changing machine itself is used.

In actual facts, the known tyre changing machines comprise a bead breaking unit comprising a bead breaking arm arranged horizontally and having a first end hinged to a sidewall of the casing, or bedplate, of the machine itself and a second end provided with a bead breaking tool, also called "blade".

The arm is operated by a pneumatic or hydraulic cylinder also associated with the sidewall of the bedplate onto which the bead breaking arm is hinged. The bedplate is also provided with an abutment surface that operates in conjunction with the blade to carry out bead breaking.

The bead breaking arm is moved in a flag fashion between an opening position, to allow the fitting of the wheel to be removed between the abutment surface and the arm, and a closing position, wherein the blade presses on the beads of each tyre sidewall, detaching them from the edges of the wheel rim. In fact, the bead breaking operation takes place on both sidewalls of the wheel and with several operations.

At each operation, the blade is pressed onto the tyre by means of the flag movement of the bead breaking arm, thus causing the bead to partially detach from the wheel rim by, e.g., 1 mm. Subsequently, the wheel is rotated by an operator so that the operation can be repeated on another portion of the tyre.

It has been noted that when bead breaking is completed in accordance with known tyre changing machines, the tyre tends to only partially detach from the rim. It is therefore necessary to repeat the operation several times (i.e. machining on the whole circumference of the rim by several complete turns of the wheel, for example three turns for each bead) in order to have a total detachment of the tyre on each sidewall of the wheel.

The bead breaking operation, carried out by an operator, is thus long lasting and requires several wheel turns.

The main aim of the present invention is to devise a bead breaking unit for tyre changing machines that allows reducing the working time required to carry out complete bead breaking.

In particular, the present invention aims to devise a solution that makes it possible to complete bead breaking, e.g., in a single turn of the tyre for both sidewalls of the wheel, thus reducing the work done by the operator.

The present invention therefore relates to a bead breaking unit for tyre changing machines in accordance with claim 1 and provided with a bead breaking arm and with a vibrating bead breaking tool which make it possible to overcome the drawbacks mentioned above with reference to the prior art.

Other characteristics and advantages of the present invention will be more evident from the description of a preferred, but not exclusive, embodiment of a bead breaking unit for tyre changing machines, illustrated by way of an indicative, yet non-limiting example, in the attached tables of drawings wherein:
- Figure 1 shows a perspective view of a bead breaking unit fitted on a tyre changing machine,
- Figure 2 shows a perspective view of a bead breaking unit of Figure 1,
- Figure 3 shows a rear view of a portion of the bead breaking arm of the bead breaking unit in Figure 2,
- Figures 4 and 5 show exploded views of the bead breaking tool according to the present invention.

With reference to the examples of the attached figures, reference numeral 6 globally indicates a bead breaking unit for tyre changing machines 1. The bead breaking unit 6 is mounted on a tyre changing machine 1 and can be used for the first detachment of the bead of a tyre P from the rim C thereof, prior to the removal operation of the tyre P itself carried out on the tyre changing machine 1.

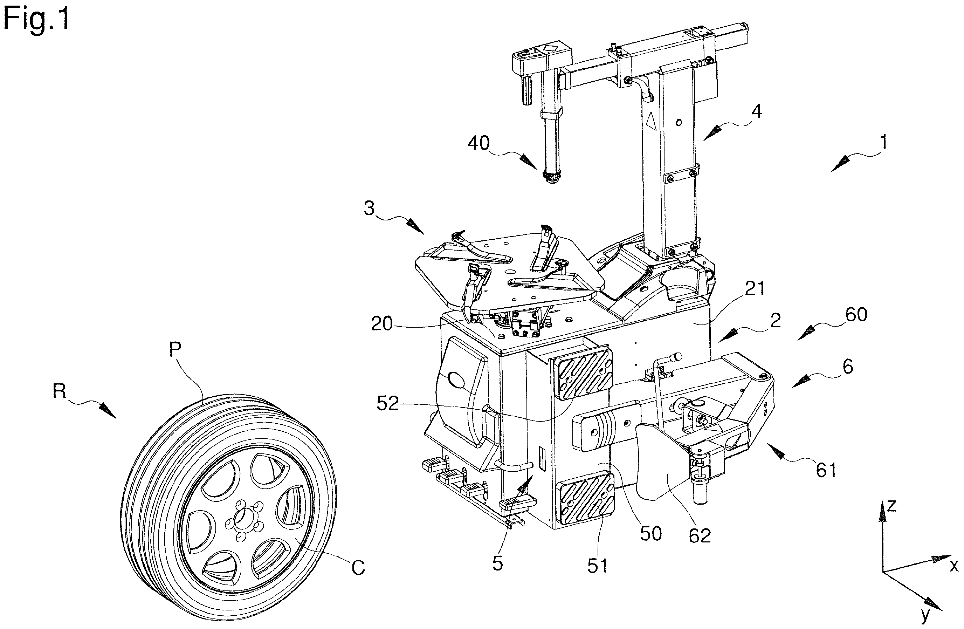

As shown in the example in Figure 1, the tyre changing machine 1 comprises a bedplate 2 on which are arranged a gripping and rotation assembly 3 of a wheel R and an arm 4 provided with a tool 40 to remove the tyre P as a result of its preliminary bead breaking. The tyre changing machine 1 is also provided with a counteracting element 5 adapted to operate in conjunction with the bead breaking unit 6 to remove the tyre P. The bedplate 2 comprises a frame structure resting or fixed to the ground having a substantially parallelepiped shape in which four sidewalls are located vertically and perpendicular to each other and an upper closure base 20 arranged horizontally along a plane X-Y. Preferably, on the upper base 20 of the bedplate 2 is mounted the gripping and rotation assembly 3 of the wheel and the arm 4, while on a sidewall 21 of the bedplate 2, corresponding to one of the largest sides of the frame, are fixed the bead breaking unit 6 and the counteracting element 5. The counteracting element 5 comprises an abutment surface 50 against which, in use, each sidewall of the wheel R is placed in order to remove the tyre P. In particular, the abutment surface 50 of the counteracting element 5 extends vertically and parallel to the sidewall 21 of the bedplate 2. Preferably, on the abutment surface 50 there are two knurled portions 51, 52 arranged on opposite ends of the counteracting element 5 to increase the friction coefficient between the abutment surface 50 and the wheel to be removed.

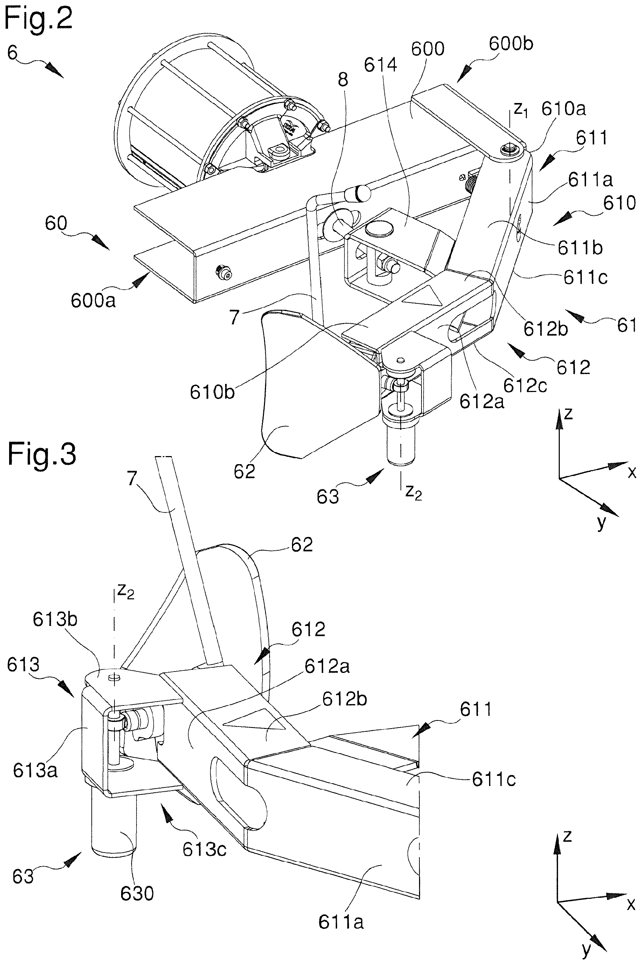

As shown in the example in Figure 2, the bead breaking unit 6 comprises a frame 60 and a bead breaking arm 61 mounted thereon.

Preferably, the frame 60 comprises a supporting bar 600 elongated and extended, in use, horizontally between a first end 600a and a second end 600b.

Preferably, the bead breaking arm 61 is mounted at the second end 600b of the supporting bar 600.

The bead breaking arm 61 also comprises an elongated element 610 that extends between two extremities 610a, 610b. In particular, the first extremity 610a of the elongated element 610 is hinged to the second end 600b of the supporting bar 600 so that the elongated element 610 can rotate around a vertical axis z1.

Preferably, the elongated element 610 comprises two profiled elements 611, 612 inclined to each other to form an elbow-shaped portion in a substantially central position between the profiled elements 611, 612. Alternative embodiments cannot however be ruled out wherein the bead breaking arm 61 has a different shape and consists, e.g., of a single straight profiled element or of one or more curved profiled elements.

In particular, the elongated element 610, and therefore the profiled elements 611, 612, have a substantially "C" shape in which are identified, for each one, an external lateral surface 611a,612a, an upper surface 611b,612b and a lower surface 611c,612c substantially rectangular.

Even more specifically, the internal side of the profiled elements 611,612, and therefore of the "C" profiled element, faces the sidewall 21 of the bedplate 2.

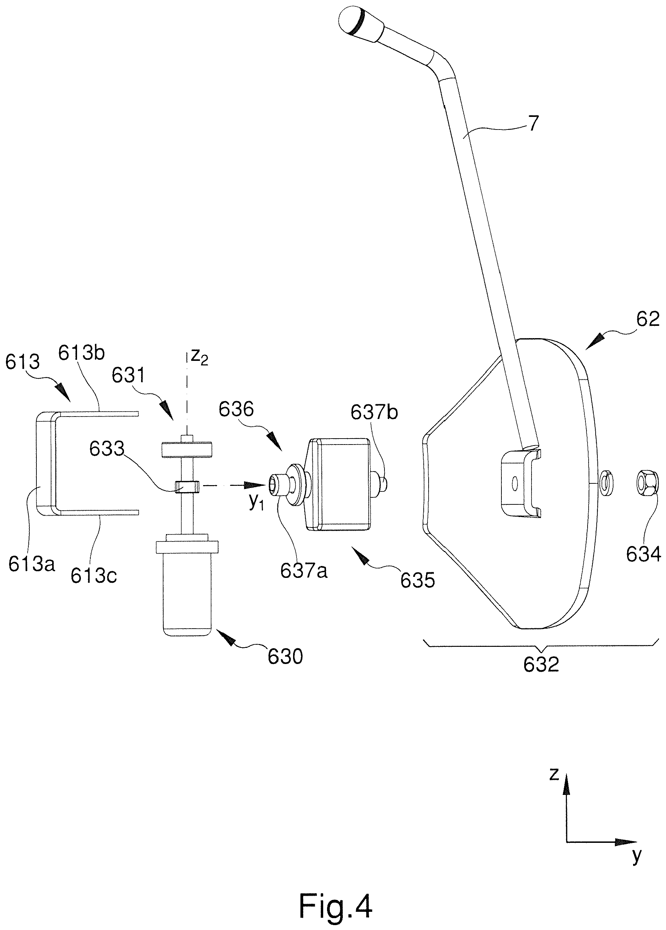

As shown in the examples in Figures 2, 3 and 4, the bead breaking unit 6 comprises a bead breaking tool 62, also called "blade", adapted to remove the tyre P from the wheel R and, advantageously, actuation means 63 associated with the blade 62 to make it vibrate, the operation of which will be described in detail later in the present description.

With reference to the examples shown in the figures, the bead breaking unit 6 also comprises a driving actuator 8 for the movement of the arm 61 between a disengagement position, wherein the blade 62 is further away from the abutment surface 50, and an intervention position, wherein the blade 62 is close to the abutment surface 50 and is adapted to engage at one side of the tyre P. The driving actuator 8 is placed between the frame 60 and the bead breaking arm 61. Conveniently, the driving actuator 8 is of the fluid type, i.e. it consists of a pneumatic or hydraulic actuator, such as a cylinder/piston pair, and is connected to a fluid activation circuit (not shown).

Preferably, the driving actuator 8 is connected to the arm 61 at the opposite side of the elbow-shaped portion between the two profiled sections 611,612. More specifically, between the driving actuator 8 and the arm 61 there is a connecting element 614 attached at one end to the elbow-shaped portion between the two profiled elements and at the other end to the driving actuator 8 and intended to transfer the motion of the driving actuator 8 to the bead breaking arm 61.

The blade 62 is conveniently associated with a control lever 7, preferably fixed at the extremity 610 of the arm 61 to be gripped by an operator and adapted to make the tyre removal operation easier and more practical.

Preferably, the bead breaking tool 62 has a "blade" shape. In particular, the bead breaking tool 62 has a concavity such as to adapt to the curvature of the tyre P.

Advantageously, with reference to the actuation means 63, the latter comprise a motorized cylinder 630, a rotating shaft 631 and a cam 633 fitted onto the shaft 631. The motorized cylinder 630 supports the shaft 631 to make it rotate around its own substantially vertical axis z2 so that the rotary motion of the shaft 631 causes an oscillatory motion for the cam 633 along a direction y1 substantially orthogonal to the direction z2.

For this purpose, the actuation means 63 comprise a piston 637 which can be engaged with the cam 633, at one of its terminal ends 637a, and with the blade 62 at a second of its terminal ends 637b, opposite the first end 367a. In actual facts, during the rotation of the cam 633, the piston 637 is moved along the direction y1 to advantageously make the blade 62 vibrate during the tyre removal operation.

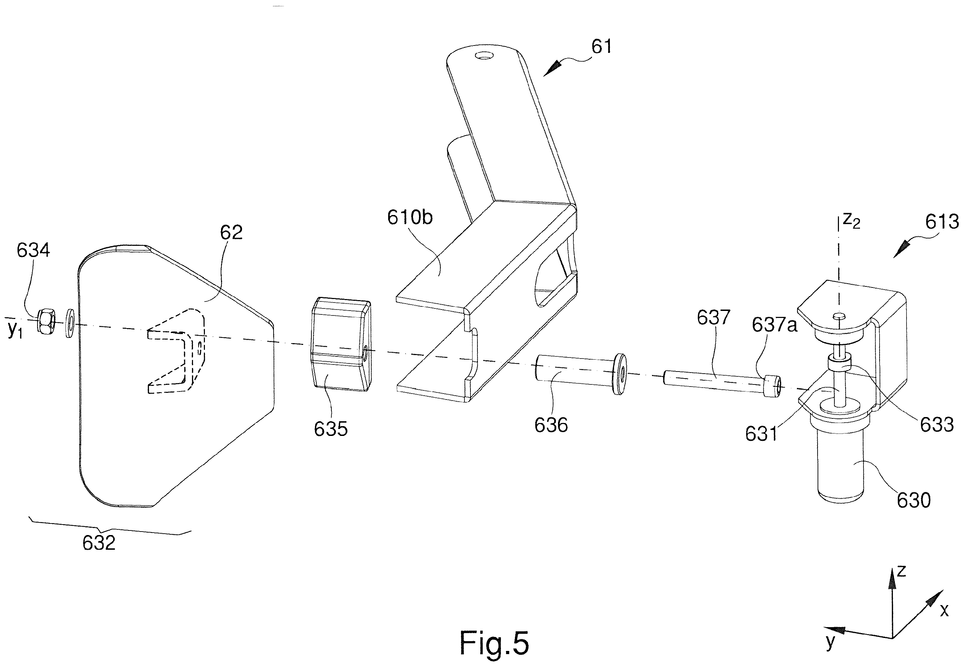

As shown in the embodiment in Figure 5, the piston 637 is supported in a sliding manner by the bead breaking arm 61 at the extremity 610b thereof. Preferably, the piston 637 is held by a perforated support 635 and fixed at the extremity 610b of the arm 61 and is intended to receive a cylindrical element 636 which allows the piston 637 to slide therein. Preferably, the support 635 is fixed and locked together with the extremity 610b of the bead breaking arm 61.

Preferably, the second terminal end 637b of the piston 637 is intended to be fixed to the blade 62 by means of a coupling element 632. In particular, the second terminal end 637b of the piston 637 is inserted into a hole obtained in the coupling element 632 and is locked by a bolt 634.

According to one embodiment, the extremity 610b of the bead breaking arm 61 also comprises a housing 613, overhanging from the external lateral surface 612a of the profiled element 612, to support the shaft 632 and thus the entire actuator 63. Preferably, the housing 613 has a "C" shape in which there are an external lateral surface 613a, an upper surface 613b and a lower surface 613c which are substantially perpendicular to each other. More particularly, the internal side of the housing 613, and therefore of the "C" profile, faces the external lateral surface 612a of the profiled element 612.

Two coaxial holes, arranged diametrically opposite on the upper surface 613b and the lower surface 613c, are made on the housing 613 to receive the shaft 632 and allow the latter to rotate around the axis z2. Basically, the holes allow making a revolute pair between the housing 613 and the shaft 631 and therefore the actuator 63.

In detail, the shaft 631 is fitted into the housing 613 through the two holes, while the cylinder 630 is arranged outside the housing 613 and fixed to the lower surface 613c of the housing 613.

As can be seen from the present description, it has been ascertained that the described invention achieves the intended objects and in particular it is underlined that, by means of the bead breaking unit for tyre changing machines, it is possible to carry out bead breaking in just one turn of the tyre thanks to the presence of a vibrating bead breaking tool which helps the operator to speed up and therefore reduce the working time during bead breaking.

## Claims

1. Bead breaking unit (6) for tyre changing machines (1), comprising:
at least one bead breaking arm (61) extended between a first extremity (610a) and a second extremity (610b) and connectable to said tyre changing machine (1) in order to be able to rotate around an axis of rotation (Z1), in use, substantially vertical, and
at least one bead breaking tool (62) for the bead breaking of a tyre (P) of a wheel (R), wherein said first extremity (610a) of said bead breaking arm (61) is hinged to said frame (60), and wherein said second extremity (610b) is connected to said bead breaking tool (62),
**characterized by** the fact that it comprises
actuation means (63) fixed between said second extremity (610b) of said bead breaking arm (62) and said bead breaking tool (62) and intended to make said bead breaking tool (62) vibrate during the bead breaking of said tyre (P).

2. Bead breaking unit (6) according to claim 1, comprising a driving actuator (8) for the movement of said bead breaking arm (61) between a disengagement position, wherein said bead breaking tool (62) is further away from said tyre (P), and an intervention position, wherein said bead breaking tool (62) is close to said tyre (P) to engage at one side of the latter.

3. Bead breaking unit (6) according to claim 1 or 2, wherein the actuation means (63) comprise a motorized cylinder (630) for the rotation of a rotating shaft (631) and a cam (633) fitted onto said shaft (631), wherein said motorized cylinder (630) supports said shaft (631) to make it rotate around its own substantially vertical axis (z2) so that the rotary motion of said shaft (631) develops an oscillatory motion for said cam (633) along a direction (y1) substantially orthogonal to said vertical direction (z2).

4. Bead breaking unit (6) according to any of the preceding claims, wherein said actuation means (63) comprise a piston (637) which can be engaged with said cam (633) and with said bead breaking tool (62), wherein said piston (637), during the rotation of said cam (633), is moved by the latter along said direction (y1) for the vibration of said bead breaking tool (62).

5. Bead breaking unit (6) according to any of the preceding claims, wherein said bead breaking arm (61) comprises two profiled elements (611,612) inclined to each other to form an elbow-shaped portion in a substantially central position between said profiled elements (611,612).

6. Bead breaking unit (6) according to any of the preceding claims, wherein said piston (637) is supported in a sliding manner by said bead breaking arm (61) at said extremity (610b) thereof.

7. Bead breaking unit (6) according to any of the preceding claims, wherein said extremity (610b) of said bead breaking arm (61) comprises a housing (613) overhanging from the external lateral surface (612a) of said profiled element (612) and drilled to receive said shaft (632) of said actuation means (63).

8. Bead breaking unit (6) according to any of the preceding claims, wherein said bead breaking tool (62) has a concavity such as to adapt to the curvature of said tyre (P) of said wheel (R).

9. Bead breaking unit (6) according to any of the preceding claims, wherein said bead breaking tool (62) vibrates during said intervention position of said bead breaking arm (61).

10. Tyre changing machine (1) comprising a bead breaking unit (6) according to any of the preceding claims.
